# EUROPÄISCHE PATENTSCHRIFT

(11) **EP 2 900 540 B1**
(45) Veröffentlichungstag und Bekanntmachung des Hinweises auf die Patenterteilung: **18.01.2017**
(21) Anmeldenummer: 13759137.6
(22) Anmeldetag: 30.08.2013
(51) Int. Cl.: B62D 1/184, B62D 1/19

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 26.09.2012 DE 102012109079
(43) Veröffentlichungstag der Anmeldung: 05.08.2015
(73) Patentinhaber: ThyssenKrupp Presta Aktiengesellschaft, 9492 Eschen (LI); ThyssenKrupp AG, 45143 Essen (DE)
(72) Erfinder: WAIBEL, Gerhard, A-6858 Bildstein (AT); DOMIG. Markus, A-6781 Bartholomäberg (AT); HAUGG, Hans, 6800 Feldkirch (AT); LEITGEB, Michael, FL-9493 Mauren (LI)
(74) Vertreter: ThyssenKrupp Intellectual Property GmbH
(86) Internationale Anmeldenummer: PCT/EP2013/002607
(87) Internationale Veröffentlichungsnummer: WO 2014/048535

(56) Entgegenhaltungen:
- EP-A2- 1 464 560
- DE-A1-102009 058 686
- DE-B3-102005 052 123

## Beschreibung

Die vorliegende Erfindung betrifft eine Lenksäule für ein Kraftfahrzeug, wobei die Lenksäule zumindest zwei Lenksäulenbauteile und zumindest eine Feststelleinrichtung sowie zumindest eine Energieabsorptionsvorrichtung aufweist und die Lenksäulenbauteile in einem Freigabezustand der Feststelleinrichtung zur Einstellung der Position eines an der Lenksäule befestigbaren Lenkrades relativ zueinander verstellbar und in einem Schließzustand der Feststelleinrichtung von der Feststelleinrichtung in ihrer Lage relativ zueinander festgehalten sind, wobei die Energieabsorptionsvorrichtung zumindest ein Halteteil und zumindest ein zwischen den Lenksäulenbauteilen wirkendes Energieabsorptionselement zum Abbau von in einem Crashfall auf die Lenksäule einwirkender Stoßenergie aufweist, wobei das Halteteil der Energieabsorptionsvorrichtung von der Feststelleinrichtung in deren Schließzustand festgehalten und in deren Freigabezustand freigegeben ist.

Bei gattungsgemäßen Lenksäulen handelt es sich um sogenannte verstellbare Lenksäulen, bei denen zumindest zwei Lenksäulenbauteile, bezüglich der Lenkspindel gesehen, in Höhen- und/oder Längsrichtung verstellt werden können, um die Position eines an der Lenksäule zu befestigenden Lenkrades an die Größe und die Sitzposition des jeweiligen Fahrzeuglenkers anpassen zu können. Die Feststelleinrichtung hält die beiden Lenksäulenbauteile in ihrem Schließzustand in ihrer eingestellten Position fest. Beim normalen Betrieb, also beim Fahren des Kraftfahrzeugs, befindet sich die Feststelleinrichtung im Schließzustand. Für die Verstellung wird die Feststelleinrichtung in ihren Freigabezustand versetzt, in dem sie eine entsprechende Verstellung zulässt. Neben der Feststelleinrichtung weisen gattungsgemäße Lenksäulen auch eine Energieabsorptionsvorrichtung auf. Diese dient dazu, im Crashfall, also im Falle eines Unfalles bzw. einer Kollision des Kraftfahrzeuges mit einem anderen Gegenstand, eine auf die Lenksäule einwirkende Stoßenergie so umzuwandeln bzw. zu vernichten, dass die Gefahr der Verletzung des jeweiligen Fahrzeuglenkers anpassen zu können. Die Feststelleinrichtung hält die beiden Lenksäulenbauteile in ihrem Schließzustand in ihrer eingestellten Position fest. Beim normalen Betrieb, also beim Fahren des Kraftfahrzeugs, befindet sich die Feststelleinrichtung im Schließzustand. Für die Verstellung wird die Feststelleinrichtung in ihren Freigabezustand versetzt, in dem sie eine entsprechende Verstellung zulässt. Neben der Feststelleinrichtung weisen gattungsgemäße Lenksäulen auch eine Energieabsorptionsvorrichtung auf. Diese dient dazu, im Crashfall, also im Falle eines Unfalles bzw. einer Kollision des Kraftfahrzeuges mit einem anderen Gegenstand, eine auf die Lenksäule einwirkende Stoßenergie so umzuwandeln bzw. zu vernichten, dass die Gefahr der Verletzung des Fahrzeuglenkers durch die Lenksäule verringert wird. Beim Energieabsorptionsvorgang im Crashfall befindet sich die Feststelleinrichtung in ihrem Schließzustand, in dem sie auch das Halteteil der Energieabsorptionsvorrichtung festhält, damit der Energieabsorptionsvorgang beim Verschieben der beiden Lenksäulenbauteile relativ zueinander stattfinden kann. Eine gattungsgemäße Lenksäule ist z.B. in der WO 2007/048153 A2 gezeigt und beschrieben.

Aus der EP 1 464 560 A2 ist ebenfalls eine gattungsgemäße Lenksäule bekannt. Diese hat einen aufwendigen Aufbau aus einer Vielzahl von Bauteilen.

Aufgabe der Erfindung ist es, eine Lenksäule der oben genannten Art mit dem Ziel eines möglichst kompakten und einfachen Aufbaus weiterzuentwickeln.

Gelöst wird diese Aufgabe durch eine Lenksäule gemäß des Patentanspruchs 1. In den Unteransprüchen sind vorteilhafte Weiterbildungen der Erfindung dargestellt. Es ist somit erfindungsgemäß vorgesehen, dass die Energieabsorptionsvorrichtung zumindest ein Anschlagelement aufweist, welches einen Verstellweg bei der Verstellung der Lenksäulenbauteile relativ zueinander im Freigabezustand der Feststelleinrichtung zumindest in einer Verstellrichtung begrenzt. Dieses mindestens eine Anschlagelement kann dabei als zusätzliches Element ausgebildet sein. Dieses zusätzliche Element kann z.B. aus einem Stahl, Nichteisenmetall oder Kunststoff oder Elastomer bestehen und an das Energieabsorptionsteil angefügt sein, beispielsweise durch Schweißen, Kleben, Krimpen, Clipsen. Es ist jedoch auch denkbar und möglich, eines oder alle Anschlagelemente integral an der Energieabsorptionsvorrichtung auszubilden, beispielsweise durch ein in einer Umformoperation oder in einer Trennoperation dargestelltes Nebenformelement der Energieabsorptionsvorrichtung.

Es ist somit eine Grundidee der Erfindung, ein Anschlagelement, welches den Verstellweg bei der Verstellung der Lenksäulenbauteile relativ zueinander im Freigabezustand der Feststelleinrichtung in zumindest einer Verstellrichtung begrenzt in die Energieabsorptionsvorrichtung zu integrieren. Hierdurch ergibt sich ein sehr einfacher mit wenig Teilen realisierbarer, kompakter Aufbau. Die Energieabsorptionsvorrichtung stellt bei der Verstellung der Lenksäulenbauteile relativ zueinander in der Freigabestellung der Feststelleinrichtung einen Anschlag zur Verfügung. Im Crashfall, also im Fall eines Unfalles bzw. einer Fahrzeugkollision übernimmt die Energieabsorptionsvorrichtung ihre an sich bekannte Funktion zum Abbau von auf die Lenksäule einwirkender Stoßenergie. Für diesen Energieabbau bzw. diese Energieumwandlung weist die Energieabsorptionsvorrichtung zusätzlich zum Halteteil zumindest ein zwischen den beiden Lenksäulenbauteilen wirkendes Energieabsorptionselement auf, welches die Stoßenergie, beispielsweise durch einen Umform- und/oder einen Auf- oder Abreißprozess, gezielt abbaut. Geeignete Energieabsorptionselemente sind beim Stand der Technik an sich bekannt. Es kann sich z.B. um Biegelaschen, Reißlaschen und/oder Reißbiegelaschen handeln. Andere Varianten sehen vor, dass ein Umformteil das Energieabsorptionselement z.B. bei einer Verschiebebewegung dieser beiden Teile relativ zueinander, vorzugsweise plastisch umformt. Bei dem Energieabsorptionselement kann es sich z.B. um ein Langloch handeln, welches zur Energieaufzehrung vom Umformteil aufgeweitet wird. Es kann sich aber, um ein weiteres Beispiel zu nennen, auch beim Energieabsorptionselement um einen Stab oder eine Stange handeln, welche vom Umformteil bei einer Relativbewegung umgeformt wird. Bevorzugte Ausgestaltungsformen sehen vor, dass das Energieabsorptionselement nicht nur zwischen den beiden Lenksäulenbauteilen wirkt, sondern auch zwischen diesen angeordnet ist. Günstigerweise ist ein Bauteil der Energieabsorptionsvorrichtung, also z.B. das Umformteil, an einem der Lenksäulenbauteile fixiert oder ein Teil davon. Ein anderes Bauteil der Energieabsorptionsvorrichtung kann dann an dem anderen Lenksäulenbauteil fixiert oder ein Teil davon sein. Hierbei kann es sich um das Energieabsorptionselement handeln. Grundsätzlich ist aber darauf hinzuweisen, dass sowohl Umformteil als auch Energieabsorptionselement jeweils auch an dem anderen Lenksäulenbauteil befestigt bzw. an diesem angeordnet ausgebildet sein können.

Eines dieser genannten Bauteile, also Umformteil oder Energieabsorptionselement ist günstigerweise am Halteteil der Energieabsorptionsvorrichtung fixiert. Das Halteteil wird im Schließzustand der Feststelleinrichtung von dieser festgehalten, womit eine im Schließzustand fixe Verbindung zwischen dem Halteteil und einem an der Feststelleinrichtung fixierten Lenksäulenbauteile geschaffen ist. Bei erfindungsgemäß eingesetzten Feststelleinrichtungen übernehmen diese, wie an sich bekannt, zwei Aufgaben. Zum einen halten sie in ihrem Schließzustand die beiden Lenksäulenbauteile in ihrer Lage relativ zueinander fest, während sie im Freigabezustand ein Verstellen dieser beiden Lenksäulenbauteile relativ zueinander zulassen. Zum anderen hält die Feststelleinrichtung in ihrem Schließzustand aber auch das Halteteil der Energieabsorptionsvorrichtung und damit auch das am Halteteil, vorzugsweise fix, angeordnete Energieabsorptionselement oder Umformteil fest. Günstig ist es, wenn die Feststelleinrichtung in ihrem Schließzustand das Halteteil mit einem Kontaktelement der Energieabsorptionsvorrichtung reib- und/oder formschlüssig festhält bzw. in dieses eingreift. Eine formschlüssige Verbindung zwischen Kontaktelement und Halteteil ist jedoch zu bevorzugen, da hiermit größere Kräfte übertragen werden können. Im Freigabezustand der Feststelleinrichtung ist das Halteteil von der Feststelleinrichtung günstigerweise freigegeben, um den Verstellvorgang der beiden Lenksäulenbauteile relativ zueinander nicht zu behindern.

Der Vollständigkeit halber sei darauf hingewiesen, dass erfindungsgemäße Lenksäulen sowohl in einer Längsrichtung, vorzugsweise parallel zur Lenkspindellängsachse der Lenkspindel, und/oder in einer Höhenrichtung, also in einer Richtung quer, vorzugsweise orthogonal, zur Längsrichtung verstellbar sein können.

Bei einem Anschlagelement handelt es sich grundsätzlich um ein Bauteil, das in seiner Ausbildung und Anordnung dazu geeignet ist, einen Anschlag gegebenenfalls unter Zusammenwirken mit entsprechenden Gegenanschlagelementen auszubilden. Bei bevorzugten Ausgestaltungsformen ist somit vorgesehen, dass die Lenksäule ein Gegenanschlagelement oder zwei Gegenanschlagelemente aufweist, welches bzw. welche zur Begrenzung des Verstellweges der Lenksäulenbauteile im Freigabezustand der Feststelleinrichtung mit dem Anschlagelement zusammenwirkt bzw. zusammenwirken. Die Begrenzung des Verstellweges bei der Verstellung der Lenksäulenbauteile relativ zueinander im Freigabezustand der Feststelleinrichtung kann vom Anschlagelement nur in einer Verstellrichtung begrenzt sein. Bevorzugte Varianten sehen aber vor, dass das Anschlagelement den Verstellweg bei der Verstellung der Lenksäulenbauteile relativ zueinander im Freigabezustand der Feststelleinrichtung in zwei einander entgegengesetzten Verstellrichtungen begrenzt. Es sind grundsätzlich auch erfindungsgemäße Varianten denkbar, bei denen das Anschlagelement für eine entsprechende Begrenzung des Verstellweges in mehr als zwei Verstellrichtungen sorgt.

Grundsätzlich kann es sich bei den relativ zueinander verstellbaren Lenksäulenbauteilen um sehr unterschiedliche Bauteile der Lenksäule handeln. Bevorzugte Varianten sehen jedoch vor, dass eines der Lenksäulenbauteile eine Lenkspindellagereinheit ist, in der eine Lenkspindel der Lenksäule um ihre Lenkspindellängsachse drehbar gelagert ist. Günstig ist es dann, wenn das andere der Lenksäulenbauteile eine Trageinheit ist, in oder an der die Lenkspindellagereinheit verschiebbar und/oder anderweitig verstellbar gelagert ist. Die Trageinheit selbst kann karosseriefest, also zur Fixierung in einer vorgegebenen Position an der Karosserie des Fahrzeuges vorgesehen sein. Insbesondere bei höhenverstellbaren Lenksäulen kann es sich bei der Trageinheit aber auch um einen Zwischenhebel, auch Schwenkhebel genannt, handeln, der schwenkbar an einem dann karosseriefest im Fahrzeug zu montierenden Konsolenteil gelagert ist. Zurückkommend auf die Gegenanschlagelemente ist grundsätzlich darauf hinzuweisen, dass bevorzugte Ausgestaltungsformen vorsehen, dass das Gegenanschlagelement oder die Gegenanschlagelemente an einem der Lenksäulenbauteile fixiert ist bzw. sind und/oder an einem der
Lenksäulenbauteile angeformt oder eingeformt ist bzw. sind. Bei dem Lenksäulenbauteil an dem das Gegenanschlagelement bzw. die Gegenanschlagelemente fixiert sind, bzw. in die sie an- oder eingeformt sind, kann es sich z.B. um die vorab erwähnte Trageinheit handeln.

Eine einfache aber sehr effektive Ausgestaltungsform der Erfindung sieht vor, dass das Anschlagelement in zumindest einem Langloch verschiebbar geführt ist und einander gegenüberliegende Enden des Langlochs als Gegenanschlagelemente zur Begrenzung des Verstellweges der Lenksäulenbauteile im Freigabezustand der Feststelleinrichtung mit dem Anschlagelement zusammenwirkt bzw. zusammenwirken. Das genannte Langloch kann dann z.B. in die Trageinheit, vorzugsweise in eine Seitenwange der Trageinheit, eingeformt oder an dieser angeformt sein.

Feststelleinrichtungen weisen oft einen Spannbolzen auf. Bei solchen Feststelleinrichtungen ist günstigerweise vorgesehen, dass das Gegenanschlagelement oder die Gegenanschlagelemente vom Spannbolzen distanziert angeordnet ist bzw. sind. In anderen Worten kann man auch sagen, dass das Gegenanschlagelement bzw. die Gegenanschlagelemente nicht Teil des Spannbolzens sondern eben ein anderes Bauteil der Lenksäule, vorzugsweise eines der genannten Lenksäulenbauteile, ist bzw. sind. Besonders kompakt bauende Ausgestaltungsformen der Erfindung sehen vor, dass das Anschlagelement am Halteteil der Energieabsorptionsvorrichtung angeordnet oder ausgebildet ist. Bei dem Halteteil kann es sich z.B. um ein Reibschluss- oder Formschlusselement handeln. Bevorzugte Ausgestaltungsformen sehen vor, dass das Halteteil zumindest eine Zahnplatte oder zumindest einen anderen zahntragenden Körper oder zumindest ein anderes Formschlusselement aufweist oder daraus besteht. Die Feststelleinrichtung hat dann günstigerweise ein entsprechendes Gegenstück zum reib- und/oder formschlüssigen Ein- bzw. Angreifen am Halteteil. Dieses Gegenstück bzw. Kontaktelement der Feststelleinrichtung kann dann z.B. entsprechend geeignete Verzahnungen oder dergleichen aufweisen.

In der nachfolgenden Figurenbeschreibung werden anhand von verschiedenen erfindungsgemäßen Ausgestaltungsformen weitere bevorzugte Merkmale und Einzelheiten verschiedener Varianten der Erfindung beispielhaft erläutert. Es zeigen:
Fig. 1 bis 4 Darstellungen zu einem ersten erfindungsgemäßen Ausführungsbeispiel und
Fig. 5 bis 13 Darstellungen zu einer zweiten erfindungsgemäßen Ausführungsvariante einer Lenksäule.

Bei beiden Ausführungsbeispielen der Erfindung, welche in den Figuren gezeigt sind, handelt es sich um Varianten, bei denen ein am Lenkradanschluss 6 befestigtes, hier nicht dargestelltes Lenkrad sowohl in Längsrichtung 16 als auch in Höhenrichtung 17 verstellbar ist. Der Lenkradanschluss 6 befindet sich am, von den Vorderrädern des Fahrzeuges abgewandten Ende einer um ihre Lenkspindellängsachse 15 drehbar in der Lenkspindeleinheit 2 gelagerten Lenkspindel 14. In beiden gezeigten Ausführungsbeispielen bildet die Lenkspindellagereinheit 2 eines der beiden, im Freigabezustand der Feststelleinrichtung 4 relativ zueinander verstellbaren Lenksäulenbauteile 2 und 3. Bei dem zweiten Lenksäulenbauteil 3 handelt es sich um eine Trageinheit in Form eines Zwischenhebels 36. Dieser Zwischenhebel 36 bzw. die Trageinheit 3 ist in beiden Ausführungsbeispielen um eine Schwenkachse 18 relativ zum Konsolenteil 19 verschwenkbar, wenn die Feststelleinrichtung 4 sich in ihrem Freigabezustand befindet. Durch diese Verschwenkbewegung der beiden Lenksäulenbauteile 2 und 3 relativ zum Konsolenteil 19 erfolgt die Höhenverstellung in den Höhenrichtungen 17. Das Konsolenteil 19 wird mit seinen Befestigungslaschen 20 an der Fahrzeugkarosserie z.B. durch Anschrauben befestigt. Zur Längsverstellung der Position des hier nicht dargestellten Lenkrades in den Längsrichtungen 16 werden die beiden Lenksäulenbauteile, also die Lenkspindellagereinheit 2 und die Trageinheit 3 relativ zueinander verschoben. Konkret ist in den gezeigten Ausführungsbeispielen dazu vorgesehen, dass die Lenkspindellagereinheit 2 samt Lenkspindel 14 entweder in einer der Längsrichtungen 16 aus der Trageinheit 3 herausgezogen oder in Gegenrichtung dazu in die Trageinheit 3 eingeschoben wird. Zur Einstellung der Position des Lenkrades muss sich die Feststelleinrichtung 4 in ihrem Freigabezustand befinden. Beim Fahren des Fahrzeugs befindet sich die Feststelleinrichtung 4 in der Regel in ihrem Schließzustand. Im Crashfall, also im Falle einer Fahrzeugkollision kann dann bei geschlossener Feststelleinrichtung 4 durch Einschieben der Lenkspindellagereinheit 2 in die Trageinheit 3 in Richtung parallel zur Längsrichtung 16 bzw. zur Lenkspindellängsachse 15 auftretende Stoßenergie mittels der Energieabsorptionsvorrichtung 5 abgebaut werden.

Eine weitere Gemeinsamkeit der beiden hier gezeigten Ausführungsbeispiele ist der grundsätzliche Aufbau der Feststelleinrichtung 4. Diese weist in den gezeigten Ausführungsbeispielen einen an sich bekannten Spannbolzen 13 auf, auf dem eine an sich bekannte Anordnung aus Nockenscheibe 22 und Gegennockenscheibe 23 vorgesehen ist. Durch Schwenken des Handbedienhebels 21 um die Längsachse 35 des Spannbolzens 13 werden die aneinander anliegenden Nocken der Nockenscheibe 22 und Gegennocken der Gegennockenscheibe 23 relativ zueinander verdreht, wodurch in Längsrichtung des Spannbolzens 13 ein Hub erzeugt wird, mit dem die Feststelleinrichtung 4, wie an sich bekannt, vom Freigabezustand in den Schließzustand und in umgekehrter Richtung verstellt werden kann. Bekannt ist an sich auch die Befestigung des Spannbolzens 13 mittels des Endstückes 27, im Beispiel in Form einer Mutter, und der Beilagscheibe 29 und/oder einem Axiallager ebenso wie das reib- und/oder formschlüssige Einwirken der Feststelleinrichtung 4 auf die Verbindung zwischen Trageinheit 3 und Lenkspindellagereinheit 2, sodass dies hier nicht mehr weiter erläutert werden muss.

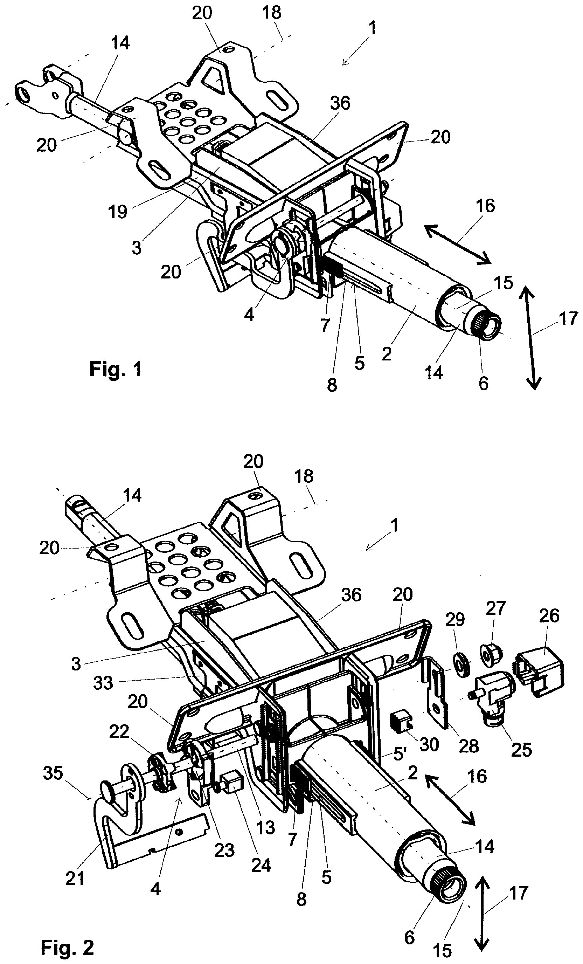

Wie besonders gut in Fig. 2 zu sehen, ist in beiden hier gezeigten Ausführungsbeispielen an der Gegennockenscheibe 23 ein Kontaktelement 24 vorgesehen, welches den Durchbruch 32 in der Seitenwange 33 der Trageinheit 3 durchdringt. Im Schließzustand der Feststelleinrichtung 4 greift das Kontaktelement 24 in das Halteteil 7 der Energieabsorptionsvorrichtung 5 ein bzw. an dieses an, womit das Halteteil 7 und das daran befestigte Energieabsorptionselement 8 oder Umformteil 31 im Schließzustand der Feststelleinrichtung 4 an der Trageinheit 3 fixiert sind. In beiden hier gezeigten Ausführungsbeispielen sind jeweils die Umformteile 31 am entsprechenden Halteteil 7 fixiert. Bei dem Halteteil 7 handelt es sich jeweils um eine Zahnplatte, in die das Kontaktelement 24 im Schließzustand der Feststelleinrichtung 4 mit entsprechenden Zähnen formschlüssig eingreift. In der Freigabestellung der Feststelleinrichtung 4 ist das Kontaktelement 24 so weit vom Halteteil 7 abgehoben, dass es nicht mehr zu einem Eingriff der Verzahnungen kommt. Zum Abdrücken des Kontaktelementes 24 vom Halteteil 7 in der Freigabestellung der Feststelleinrichtung 4 können hier im Detail nicht dargestellte Federn vorgesehen sein, die die Gegennockenscheibe 23 mit dem Kontaktelement 24 in entsprechender Richtung vorspannen.

Das zusätzliche pyrotechnische Element 25 samt Befestigungsteil 26 und Zwischenplatte 28 sowie das Kontaktelement 30 und die diesem zugeordnete Energieabsorptionsvorrichtung 5' des ersten Ausführungsbeispiels können, wie in der WO 2007/048153 A2 beschrieben, ausgebildet und verwendet werden. Sie sind hier aber nicht weiter erfindungsrelevant und können daher auch im ersten Ausführungsbeispiel weggelassen werden.

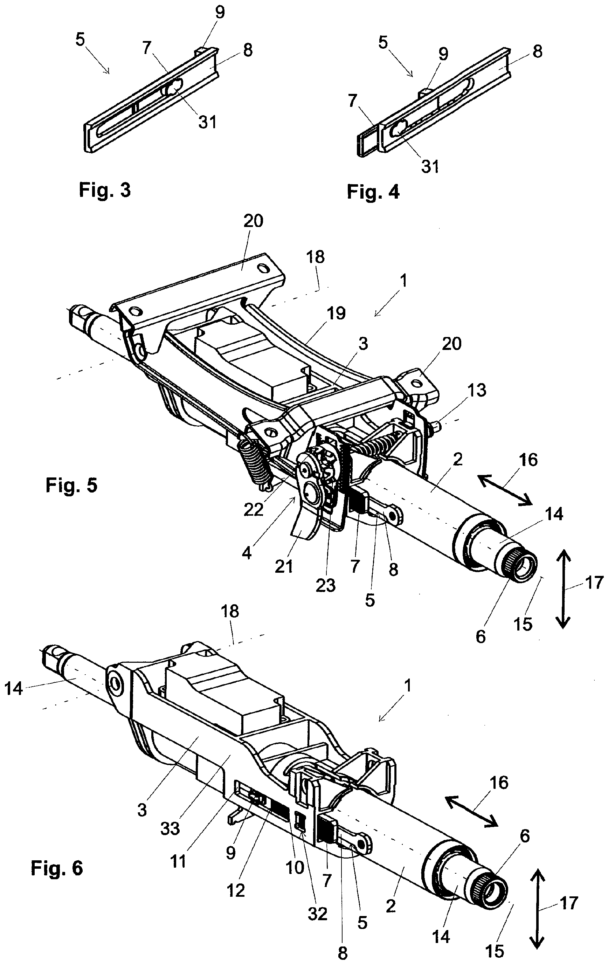

In beiden hier gezeigten Ausführungsbeispielen ist vorgesehen, dass die jeweilige Energieabsorptionsvorrichtung 5 jeweils ein Anschlagelement 9 aufweist, welches den Verstellweg der Lenksäulenbauteile 2 und 3 in beide Längsrichtungen 16 begrenzt, indem es mit entsprechenden Gegenanschlagelementen 10 und 11 zusammenwirkt. In beiden Ausführungsbeispielen sind die Gegenanschlagelemente 10 und 11 durch jeweils einander gegenüberliegende Enden eines Langlochs 12 gebildet. Das Langloch 12 befindet sich jeweils in einer Seitenwange 33 der jeweiligen Trageinheiten 3. In den Darstellungen des ersten Ausführungsbeispiels in den Fig. 1 und 2 ist das Langloch 12 mit den Gegenanschlagelementen 10 und 11 jeweils verdeckt und nicht zu sehen. Die Ausgestaltung kann aber identisch zum zweiten Ausführungsbeispiel sein. Bei diesem sind in den Fig. 6 bis 10 jeweils die Feststelleinrichtung 4 und das Konsolenteil 19 nicht dargestellt, sodass man direkt auf das in die Trageinheit 3 bzw. deren Seitenwange 33 eingeformte Langloch 12 sehen kann. Gut zu sehen ist in diesen Darstellungen auch der Durchbruch 32 in der jeweiligen Seitenwange 33, durch den das Kontaktelement 24 hindurchgeführt ist, um im Schließzustand der Feststelleinrichtung 4 in das Halteteil 7 der jeweiligen Energieabsorptionsvorrichtung 5 einzugreifen. Das an der Energieabsorptionsvorrichtung 5 bzw. in beiden Ausführungsbeispielen am Halteteil 7 befestigte Anschlagelement 9 ist im Langloch 12 im Freigabezustand der Feststelleinrichtung 4 bei einer Verschiebung von Lenkspindellagereinheit 2 relativ zur Trageinheit 3 mit verschiebbar. Trifft das Anschlagelement 9 bei dieser Verschiebebewegung auf eines der Gegenanschlagelemente 10 oder 11, so wird hierdurch der Verstellweg der Verstellung zwischen den Lenksäulenbauteilen 2 und 3 begrenzt.

Während die Feststelleinrichtung 4 mit ihrem Kontaktelement 24 in den beiden Ausführungsbeispielen im Wesentlichen gleich ausgeführt ist, unterscheiden sich die beiden hier gezeigten Ausführungsvarianten der Erfindung im konkreten Aufbau der Energieabsorptionsvorrichtung 5.

Beim ersten Ausführungsbeispiel ist am Halteteil 7 der Energieabsorptionsvorrichtung 5 ein Umformteil 31 fixiert, welches in ein Langloch des Energieabsorptionselementes 8 der Energieabsorptionsvorrichtung 5 eingreift. Der Durchmesser des Umformteils 31 und die Öffnungsweite dieses Langlochs im Energieabsorptionselement 8 sind so aufeinander abgestimmt, dass das Umformteil 31 nur dann entlang des Langlochs bewegt werden kann, wenn es gleichzeitig die das Langloch begrenzenden Ränder des Energieabsorptionselementes 8 umformt. Durch diese Umformung wird der gewünschte Abbau der im Crashfall auf die Lenksäule 1 einwirkenden Stoßenergie erzielt. Im ersten Ausführungsbeispiel ist das Energieabsorptionselement 8 fix an der Lenkspindellagereinheit 2 befestigt, während das Umformteil 31 über das Halteteil 7 im Schließzustand der Feststelleinrichtung 4 von dieser an der Trageinheit 3 festgehalten wird, sodass es im Crashfall bei einer Bewegung von Lenkspindellagereinheit 2 und Trageinheit 3 relativ zueinander zwangsweise zur beschriebenen Energieaufzehrung bzw. zum beschriebenen Energieabbau kommt. Der Vollständigkeit halber sei darauf hingewiesen, dass es abweichend von der im ersten Ausführungsbeispiel gezeigten Variante natürlich auch möglich ist, dass, das Langloch aufweisende Energieabsorptionselement 8 am Halteteil 7 und das Umformteil 31 an der Lenkspindellagereinheit 2 zu fixieren bzw. auszubilden.

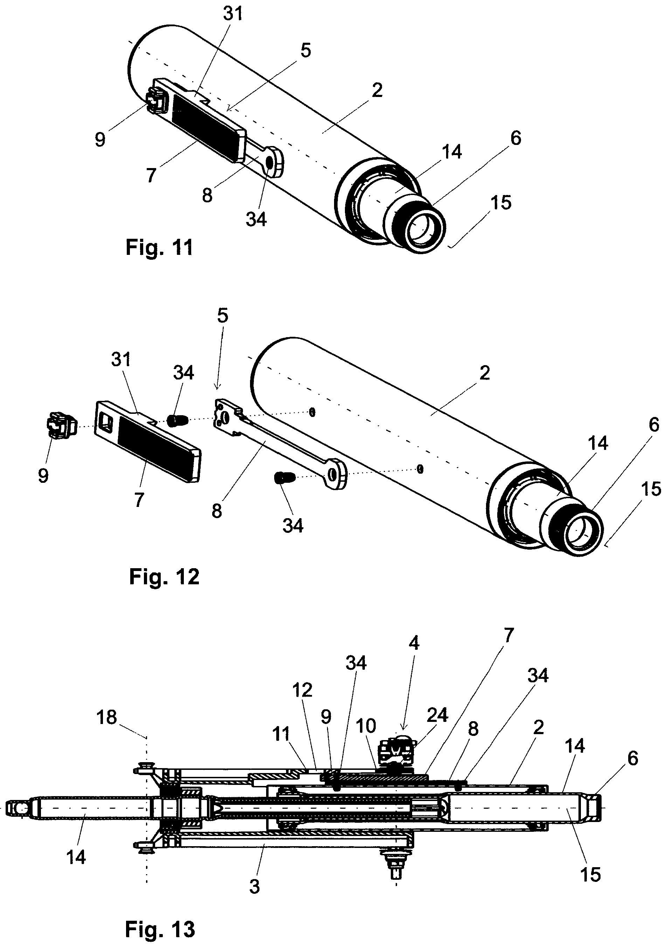

Die Ausbildung der Energieabsorptionsvorrichtung 5 des zweiten Ausführungsbeispiels ist besonders gut in den Fig. 11 und 12 zu sehen. Beim Energieabsorptionselement 8 handelt es sich in diesem zweiten Ausführungsbeispiel um einen, mittels der Schrauben 34 an der Lenkspindellagereinheit 2 fixierten Streifen, auf dem das Halteteil 7 mittels der daran angeformten Umformteile 31 gehalten ist. Bei der gezeigten Variante des zweiten Ausführungsbeispiels befindet sich am Halteteil 7 darüber hinaus auch das Anschlagelement 9. Kommt es nun im Crashfall zu einer Relativverschiebung zwischen Halteteil 7 bzw. Trageinheit 3 und der Lenkspindellagereinheit 2, so erfährt das streifenförmig ausgebildete Energieabsorptionselement 8 dieses Ausführungsbeispiels mittels der Umformteile 31 eine Umformung, die den gewünschten Abbau der Stoßenergie hervorruft.

Fig. 13 zeigt einen Längsschnitt durch das zweite Ausführungsbeispiel einer erfindungsgemäßen Lenksäule 1. Hier ist besonders gut zu sehen, wie das Energieabsorptionselement 8 an der Lenkspindellagereinheit 2 befestigt ist und das Halteteil 7 im Schließzustand der Feststelleinrichtung 4 mittels des Kontaktelementes 24 an der Trageinheit 3 festgehalten wird. Gut zu erkennen ist auch, wie das am Halteteil 7 befestigte bzw. angeformte Anschlagelement 9 in das Langloch 12 in der Trageinheit 3 hineinragt.

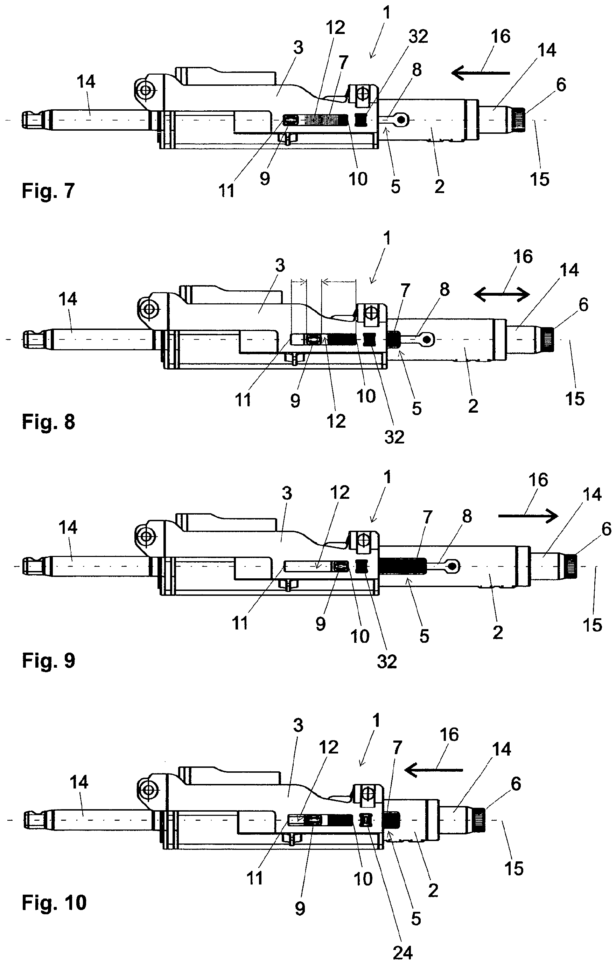

In den Fig. 7 bis 10 sind am Beispiel der zweiten Ausführungsvariante der Erfindung verschiedene Betriebszustände gezeigt, welche auch mit dem ersten Ausführungsbeispiel realisiert werden können. In Fig. 7 befindet sich die hier nicht dargestellte Feststelleinrichtung 4 in ihrem Freigabezustand, sodass die Lenkspindellagereinheit 2 samt Energieabsorptionsvorrichtung 5 so weit in Richtung 16 in die Trageinheit 3 eingeschoben werden kann, bis das Auftreffen des am Halteteil 7 befestigten Anschlagelementes 9 am Gegenanschlagelement 11 also an einem der Enden des Langlochs 12 diese Verstellbewegung begrenzt.

Fig. 8 zeigt eine Zwischenstellung, bei der die Lenkspindellagereinheit 2 im Freigabezustand der Feststelleinrichtung 4 gemeinsam mit der gesamten Energieabsorptionsvorrichtung 5 in beiden Längsrichtungen 16 verstellt werden kann, bis das Anschlagelement 9 auf das jeweilige Gegenanschlagelement 10 bzw. 11 trifft, um den Verstellweg dann zu begrenzen.

Fig. 9 zeigt den Betriebszustand, bei dem bei geöffneter Feststelleinrichtung 4, also wenn sich die Feststelleinrichtung 4 in ihrem Freigabezustand befindet, die Lenkspindellagereinheit 2 samt Lenkspindel 14 und Energieabsorptionsvorrichtung 5 so weit in der dort eingezeichneten Längsrichtung 16 aus derTrageinheit 3 herausgezogen ist, dass das Anschlagelement 9 am Gegenanschlagelement 10 anschlägt und so den Verstellweg begrenzt.

Festzuhalten ist bezüglich der Fig. 7 bis 9, dass die Energieabsorptionsvorrichtung 5 im Freigabezustand der Feststelleinrichtung 4 immer vollständig mit der Lenkspindellagereinheit 2 mitbewegt wird. Abgesehen vom Missbrauchsfall, wird die Lenkspindellagereinheit 2 mit dem in diesem Ausführungsbeispiel daran fixierten Energieabsorptionselement 8 nur im Crashfall relativ zum Halteteil 7 samt daran angeordnetem Anschlagelement 9 und Umformteil 31 verschoben, wodurch es zu dem bereits beschriebenen Abbau der Stoßenergie kommt. Fig. 10 zeigt den Endzustand, bei dem die Lenkspindellagereinheit 2 samt daran angeordnetem Energieabsorptionselement 8 vollständig unter das Halteteil 7 eingeschoben wurde, wobei es zu einer entsprechenden Umformung des Energieabsorptionselementes 8 und damit zu einem entsprechenden Abbau der Stoßenergie gekommen ist. Bei diesem Energieabsorptionsvorgang wird das Halteteil 7 über das Kontaktelement 24 von der Feststelleinrichtung 4 an der Trageinheit 3 festgehalten, sodass auch das Anschlagelement 9 in seiner Position zwischen den Gegenanschlagelementen 10 und 11 verharrt.

Der Vollständigkeit halber wird darauf hingewiesen, dass die Erfindung natürlich abweichend von den gezeigten und erläuterten Ausführungsbeispielen auch noch in ganz anderen Ausgestaltungsvarianten realisiert werden kann. Insbesondere sei darauf hingewiesen, dass dies für die Ausbildung der Energieabsorptionsvorrichtung 5 gilt. Grundsätzlich können erfindungsgemäße Energieabsorptionsvorrichtungen mit entsprechenden Anschlagelementen 9 alle beim Stand der Technik an sich bekannten Arten der Energieabsorption realisieren. Insbesondere sei darauf hingewiesen, dass es sich beim Energieabsorptionselement 8 natürlich auch um an sich bekannte Biegelaschen, Reißbiegelaschen und reine Reißlaschen handeln kann.

**Legende**

| zu den Hinweisziffern: | | | |
|---|---|---|---|
| 1 | Lenksäule | 29 | Beilagscheibe |
| 2 | Lenksäulenbauteil | 30 | Kontaktelement |
| 3 | Lenksäulenbauteil | 31 | Umformteil |
| 4 | Feststelleinrichtung | 32 | Durchbruch |
| 5, 5' | Energieabsorptionsvorrichtung | 33 | Seitenwange |
| 6 | Lenkradanschluss | 34 | Schraube |
| 7 | Halteteil | 35 | Längsachse |
| 8 | Energieabsorptionselement | 36 | Zwischenhebel |
| 9 | Anschlagelement | | |
| 10 | Gegenanschlagelement | | |
| 11 | Gegenanschlagelement | | |
| 12 | Langloch | | |
| 13 | Spannbolzen | | |
| 14 | Lenkspindel | | |
| 15 | Lenkspindellängsachse | | |
| 16 | Längsrichtung | | |
| 17 | Höhenrichtung | | |
| 18 | Schwenkachse | | |
| 19 | Konsolenteil | | |
| 20 | Befestigungslasche | | |
| 21 | Handbedienhebel | | |
| 22 | Nockenscheibe | | |
| 23 | Gegennockenscheibe | | |
| 24 | Kontaktelement | | |
| 25 | pyrotechnisches Element | | |
| 26 | Befestigungsteil | | |
| 27 | Endstück | | |
| 28 | Zwischenplatte | | |

## Patentansprüche

1. Lenksäule (1) für ein Kraftfahrzeug, wobei die Lenksäule (1) zumindest zwei Lenksäulenbauteile (2, 3) und zumindest eine Feststelleinrichtung (4) sowie zumindest eine Energieabsorptionsvorrichtung (5) aufweist und die Lenksäulenbauteile (2, 3) in einem Freigabezustand der Feststelleinrichtung (4) zur Einstellung der Position eines an der Lenksäule (1) befestigbaren Lenkrades relativ zueinander verstellbar und in einem Schließzustand der Feststelleinrichtung (4) von der Feststelleinrichtung (4) in ihrer Lage relativ zueinander festgehalten sind, wobei die Energieabsorptionsvorrichtung (5) zumindest ein Halteteil (7) und zumindest ein zwischen den Lenksäulenbauteilen (2, 3) wirkendes Energieabsorptionselement (8) zum Abbau von in einem Crashfall auf die Lenksäule (1) einwirkender Stoßenergie aufweist, wobei das Halteteil (7) der Energieabsorptionsvorrichtung (5) von der Feststelleinrichtung (4) in deren Schließzustand festgehalten und in deren Freigabezustand freigegeben ist, **dadurch gekennzeichnet, dass** die Energieabsorptionsvorrichtung (5) zumindest ein Anschlagelement (9) aufweist, welches einen Verstellweg bei der Verstellung der Lenksäulenbauteile (2, 3) relativ zueinander im Freigabezustand der Feststelleinrichtung (4) zumindest in einer Verstellrichtung begrenzt.

2. Lenksäule (1) nach Anspruch 1, **dadurch gekennzeichnet, dass** das Anschlagelement (9) den Verstellweg bei der Verstellung der Lenksäulenbauteile (2, 3) relativ zueinander im Freigabezustand der Feststelleinrichtung (4) in zwei einander entgegengesetzten Verstellrichtungen begrenzt.

3. Lenksäule (1) nach Anspruch 1 oder 2, **dadurch gekennzeichnet, dass** die Lenksäule (1) ein Gegenanschlagelement (10, 11) oder zwei Gegenanschlagelemente (10, 11) aufweist, welches bzw. welche zur Begrenzung des Verstellweges der Lenksäulenbauteile (2, 3) im Freigabezustand der Feststelleinrichtung (4) mit dem Anschlagelement (9) zusammenwirkt bzw. zusammenwirken.

4. Lenksäule (1) nach Anspruch 3, **dadurch gekennzeichnet, dass** das Gegenanschlagelement (10, 11) oder die Gegenanschlagelemente (10, 11) an einem der Lenksäulenbauteile (2, 3) fixiert ist bzw. sind und/oder an einem der Lenksäulenbauteile (2, 3) angeformt oder eingeformt ist bzw. sind.

5. Lenksäule (1) nach Anspruch 3, **dadurch gekennzeichnet, dass** das Gegenanschlagelement oder die Gegenanschlagelemente am Spannbolzen (13) angeordnet ist bzw. sind.

6. Lenksäule (1) nach einem der Ansprüche 1 bis 5, **dadurch gekennzeichnet, dass** das Anschlagelement (9) in zumindest einem Langloch (12) verschiebbar geführt ist und einander gegenüberliegende Enden des Langlochs (12) als Gegenanschlagelemente (10, 11) zur Begrenzung des Verstellweges der Lenksäulenbauteile (2, 3) im Freigabezustand der Feststelleinrichtung (4) mit dem Anschlagelement (9) zusammenwirkt bzw. zusammenwirken.

7. Lenksäule (1) nach einem der Ansprüche 3 bis 6, **dadurch gekennzeichnet, dass** die Feststelleinrichtung (4) zumindest einen Spannbolzen (13) aufweist und das Gegenanschlagelement (10, 11) oder die Gegenanschlagelemente (10, 11) vom Spannbolzen (13) distanziert angeordnet ist bzw. sind.

8. Lenksäule (1) nach einem der Ansprüche 1 bis 7, **dadurch gekennzeichnet, dass** das Anschlagelement (9) am Halteteil (7) der Energieabsorptionsvorrichtung (5) angeordnet oder ausgebildet ist.

9. Lenksäule (1) nach einem der Ansprüche 1 bis 8, **dadurch gekennzeichnet, dass** das Halteteil (7) zumindest eine Zahnstange oder zumindest einen anderen zahntragenden Körper oder zumindest ein anderes Formschlusselement aufweist oder daraus besteht.

10. Lenksäule (1) nach einem der Ansprüche 1 bis 9, **dadurch gekennzeichnet, dass** eines der Lenksäulenbauteile (2) eine Lenkspindellagereinheit ist, in der eine Lenkspindel (14) der Lenksäule (1) um ihre Lenkspindellängsachse (15) drehbar gelagert ist.

11. Lenksäule (1) nach Anspruch 10, **dadurch gekennzeichnet, dass** das andere der Lenksäulenbauteile (3) eine Trageinheit ist, in oder an der die Lenkspindellagereinheit verschiebbar und/oder anderweitig verstellbar gelagert ist.

## Claims

1. Steering column (1) for a motor vehicle, the steering column (1) having at least two steering column components (2, 3) and at least one fixing device (4) and at least one energy absorption apparatus (5), and it being possible for the steering column components (2, 3) to be adjusted relative to one another in a released state of the fixing device (4) in order to set the position of a steering wheel which can be fastened to the steering column (1), and the steering column components (2, 3) being held fixedly in their position relative to one another by the fixing device (4) in a closed state of the fixing device (4), the energy absorption apparatus (5) having at least one holding part (7) and at least one energy absorption element (8) which acts between the steering column components (2, 3) for dissipating impact energy which acts on the steering column (1) in the case of a crash, the holding part (7) of the energy absorption apparatus (5) being held fixedly by the fixing device (4) in its closed state and being released in its released state, **characterized in that** the energy absorption apparatus (5) has at least one stop element (9) which limits an adjustment travel at least in one adjusting direction during the adjustment of the steering column components (2, 3) relative to one another in the released state of the fixing device (4).

2. Steering column (1) according to Claim 1, **characterized in that** the stop element (9) limits the adjustment travel in two adjusting directions which are opposed to one another during the adjustment of the steering column components (2, 3) relative to one another in the released state of the fixing device (4).

3. Steering column (1) according to Claim 1 or 2, **characterized in that** the steering column (1) has one counter-stop element (10, 11) or two counter-stop elements (10, 11) which interacts or interact with the stop element (9) in order to limit the adjustment travel of the steering column components (2, 3) in the released state of the fixing device (4).

4. Steering column (1) according to Claim 3, **characterized in that** the counter-stop element (10, 11) or the counter-stop elements (10, 11) is or are fixed on one of the steering column components (2, 3) and/or is or are formed on or in one of the steering column components (2, 3).

5. Steering column (1) according to Claim 3, **characterized in that** the counter-stop element or the counter-stop elements is or are arranged on the clamping bolt (13).

6. Steering column (1) according to one of Claims 1 to 5, **characterized in that** the stop element (9) is guided displaceably in at least one slot (12), and ends of the slot (12) which lie opposite one another interacts or interact with the stop element (9) as counter-stop elements (10, 11) for limiting the adjustment travel of the steering column components (2, 3) in the released state of the fixing device (4).

7. Steering column (1) according to one of Claims 3 to 6, **characterized in that** the fixing device (4) has at least one clamping bolt (13), and the counter-stop element (10, 11) or the counter-stop elements (10, 11) is or are arranged such that they are distanced from the clamping bolt (13).

8. Steering column (1) according to one of Claims 1 to 7, **characterized in that** the stop element (9) is arranged or configured on the holding part (7) of the energy absorption apparatus (5).

9. Steering column (1) according to one of Claims 1 to 8, **characterized in that** the holding part (7) has or consists of at least one rack or at least one other tooth-supporting body or at least one other positively locking element.

10. Steering column (1) according to one of Claims 1 to 9, **characterized in that** one of the steering column components (2) is a steering spindle bearing unit, in which a steering spindle (14) of the steering column (1) is mounted such that it can be rotated about its steering spindle longitudinal axis (15).

11. Steering column (1) according to Claim 10, **characterized in that** the other of the steering column components (3) is a supporting unit, in or on which the steering spindle bearing unit is mounted such that it can be displaced and/or adjusted in some other way.

## Revendications

1. Colonne de direction (1) pour un véhicule automobile, la colonne de direction (1) comportant au moins deux composants de colonne de direction (2, 3) et au moins un dispositif de blocage (4) ainsi qu'au moins un dispositif d'absorption d'énergie (5) et les composants de colonne de direction (2, 3) pouvant être déplacés l'un par rapport à l'autre dans un état libéré du dispositif de blocage (4) pour régler la position d'un volant de direction pouvant être fixé à la colonne de direction (1) et pouvant être maintenus fixement l'un par rapport à l'autre dans leur position par le dispositif de blocage (4) dans un état fermé du dispositif de blocage (4), le dispositif d'absorption d'énergie (5) comportant au moins une partie d'arrêt (7) et au moins un élément d'absorption d'énergie (8) agissant entre les composants de colonne de direction (2, 3) pour évacuer l'énergie de choc se produisant sur la colonne de direction (1) en cas d'accident, la partie d'arrêt (7) du dispositif d'absorption d'énergie (5) étant maintenue fixement par le dispositif de blocage (4) dans son état fermé et étant libérée dans son état libéré, **caractérisée en ce que** le dispositif d'absorption d'énergie (5) comporte au moins un élément de butée (9) limitant une course de déplacement lors du déplacement des composants de colonne de direction (2, 3) l'un par rapport à l'autre dans l'état libéré du dispositif de blocage (4) au moins dans une direction de déplacement.

2. Colonne de direction (1) selon la revendication 1, **caractérisée en ce que** l'élément de butée (9) limite la course de déplacement lors du déplacement des composants de colonne de direction (2, 3) l'un par rapport à l'autre dans l'état libéré du dispositif de blocage (4) dans deux directions de déplacement opposées l'une par rapport à l'autre.

3. Colonne de direction (1) selon la revendication 1 ou 2, **caractérisée en ce que** la colonne de direction (1) comporte un contre-élément de butée (10, 11) ou deux contre-éléments de butée (10, 11) interagissant avec l'élément de butée (9) pour limiter la course de déplacement des composants de colonne de direction (2, 3) dans l'état libéré du dispositif de blocage (4).

4. Colonne de direction (1) selon la revendication 3, **caractérisée en ce que** le contre-élément de butée (10, 11) ou les contre-éléments de butée (10, 11) est et/ou sont fixé(s) à un des composants de colonne de direction (2, 3) et/ou est et/ou sont formé(s) au niveau d'un des composants de colonne de direction (2, 3) et/ou est et/ou sont moulé(s) dans celui-ci.

5. Colonne de direction (1) selon la revendication 3, **caractérisée en ce que** le contre-élément de butée ou les contre-éléments de butée est et/ou sont disposé(s) au niveau du boulon de serrage (13).

6. Colonne de direction (1) selon l'une quelconque des revendications 1 à 5, **caractérisée en ce que** l'élément de butée (9) peut être guidé dans son déplacement dans au moins un trou oblong (12) et que les extrémités opposées l'une par rapport à l'autre du trou oblong (12) interagissent sous la forme de contre-éléments de butée (10, 11) avec l'élément de butée (9) pour limiter la course de déplacement des composants de colonne de direction (2, 3) dans l'état libéré du dispositif de blocage (4).

7. Colonne de direction (1) selon l'une quelconque des revendications 3 à 6, **caractérisée en ce que** le dispositif de blocage (4) comporte au moins un boulon de serrage (13) et que le contre-élément de butée (10, 11) ou les contre-éléments de butée (10, 11) est et/ou sont disposé(s) à une certaine distance du boulon de serrage (13).

8. Colonne de direction (1) selon l'une quelconque des revendications 1 à 7, **caractérisée en ce que** l'élément de butée (9) est disposé ou réalisé au niveau de la partie d'arrêt (7) du dispositif d'absorption d'énergie (5).

9. Colonne de direction (1) selon l'une quelconque des revendications 1 à 8, **caractérisée en ce que** la partie d'arrêt (7) comporte au moins une tige dentée ou au moins un autre corps portant des dents ou au moins un autre élément de complémentarité de formes ou est composée à partir d'au moins un de ces éléments.

10. Colonne de direction (1) selon l'une quelconque des revendications 1 à 9, **caractérisée en ce qu'**un des composants de colonne de direction (2) est une unité de palier d'arbre de direction dans laquelle un arbre de direction (14) de la colonne de direction (1) est disposé de façon à pouvoir tourner autour de son axe longitudinal d'arbre de direction (15).

11. Colonne de direction (1) selon la revendication 10, **caractérisée en ce que** l'autre composant parmi les composants de colonne de direction (3) est une unité portante dans laquelle ou au niveau de laquelle l'unité de palier d'arbre de direction est disposée de façon à pouvoir être coulissée et/ou ou sinon déplacée.
